# EUROPÄISCHE PATENTSCHRIFT

(11) **EP 1 926 788 B1**
(45) Veröffentlichungstag und Bekanntmachung des Hinweises auf die Patenterteilung: **01.03.2017**
(21) Anmeldenummer: 06793109.7
(22) Anmeldetag: 31.08.2006
(51) Int. Cl.: C09D 175/04, C09D 175/06, C09D 175/08, C08G 18/08, C08G 18/32, C08G 18/48, C08G 18/34, C08G 18/66, C08G 18/12

(54) **VERWENDUNG EINER POLYURETHANDISPERSION ENTHALTEND ALKANOLAMINE ALS BINDEMITTEL FÜR KASCHIERKLEBSTOFFE**
USE OF A POLYURETHANE DISPERSION CONTAINING ALKANOLAMINE AS A BINDER FOR LAMINATION ADHESIVES
UTILISATION D'UNE DISPERSION DE POLYURETHANNE CONTENANT DES ALKANOLAMINES COMME LIANT POUR DES ADHESIFS DE CONTRE-COLLAGE

(30) Priorität: 09.09.2005 DE 102005043173
(43) Veröffentlichungstag der Anmeldung: 04.06.2008
(73) Patentinhaber: BASF SE, 67056 Ludwigshafen am Rhein (DE)
(72) Erfinder: LICHT, Ulrike, 68309 Mannheim (DE); PREYSING, Denise, 68199 Mannheim (DE); SCHUMACHER, Karl-Heinz, 67433 Neustadt (DE); BURGHARDT, Andre, 55743 Idar-Oberstein (DE)
(74) Vertreter: BASF IP Association
(86) Internationale Anmeldenummer: PCT/EP2006/065872
(87) Internationale Veröffentlichungsnummer: WO 2007/028760

(56) Entgegenhaltungen:
- EP-A1- 1 172 426
- EP-A2- 0 806 443
- DE-A1- 10 032 977
- DE-A1- 10 127 208

## Beschreibung

Die Erfindung betrifft die Verwendung einer Polyurethandispersion als Bindemittel für Kaschierklebstoffe, dadurch gekennzeichnet, dass das Polyurethan anionische Gruppen enthält, welche zu mindestens 10 Mol % durch Alkanolamine mit mindestens zwei Hydroxylgruppen neutralisiert sind, wobei Polyurethandispersionen, welche wasseremulgierbare Polyisocyanate enthalten, ausgeschlossen sind.

Polyurethandispersionen werden häufig mit tert. Aminen wie Triethylamin neutralisiert. Als Alternativen zum Triethylamin sind z. B, Alkaliverbindungen, Ammoniak oder sonstige Amine bekannt. Niedermolekulare Amine sind meist flüchtig und daher unerwünscht. Langkettige, gering flüchtige Amine sind nicht zur Neutralisation anionischer Polyurethane geeignet, da sie entweder nur sehr grobteilige Dispersionen ergeben oder eine Dispergierung gar nicht möglich ist.

Ammoniak kann nur in Ausnahmefällen benutzt werden, da er mit den NCO-Endgruppen des häufig hergestellten NCO-terminierten Prepolymeren unter Kettenabbruch abreagiert. Alkalibasen machen den Film deutlich härter und verleihen ihm eine permanente Hydrophilie. Das verschlechtert im Lack die Wasserfestigkeit und im Klebstoff die Aktivierbarkeit.

Desweiteren ist es für eine bessere Verarbeitbarkeit erwünscht, dass die Dispersionen bei gegebenem Feststoffgehalt eine möglichst niedrige Viskosität aufweisen.

In DE-A-37 39 332 werden eine Reihe von unterschiedlichen Aminen als Neutralisierungsmittel für Polyurethandispersionen genannt. Als Amine werden dabei grundsätzlich nur solche als geeignet betrachtet, die keine mit Isocyanat reagierenden Gruppen enthalten.

Aus EP-A 806 443 sind 2 K Polyurethandispersionen bekannt, welche folgende Bestandteile enthalten:
a) ein Polyurethan mit anionischen Gruppen
b) ein wasseremulgierbares Polyisocyanat und
c) ein Alkanolamin.

Das Alkanolamin wird hier als Zusatz zu einer bereits mit anderen Aminen neutralisierten Polyurethandispersion verwendet. Am Rande findet sich auch der Hinweis, dass auch Alkanolamine c) Neutralisierungsmittel für das Polyurethan a) sein können. Aufgrund des obigen Stands der Technik gemäß DE-A-37 39 332 fasst der Fachmann aber diesen Hinweis nicht als tatsächliche technische Lehre zum Handeln auf.

Es bestand die Aufgabe, neutralisierte Polyurethandispersionen als Bindemittel für Kaschierklebstoffe zu finden, die die genannten Nachteile nicht haben.

Demgemäß wurde die oben definierte Polyurethandispersion und ihre Verwendung gefunden.

Die erfindungsgemäße Polyurethandispersion enthält vorzugsweise ein Polyurethan, welches aufgebaut ist aus
a) Diisocyanaten,
b) Diolen, von denen
   b1) 10 bis 100 mol-%, bezogen auf die Gesamtmenge der Diole (b), ein Molekulargewicht von 500 bis 5000 g/mol aufweisen, und
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine anionische Gruppe tragen, wodurch die Wasserdispergierbarkeit der Polyurethane bewirkt wird,
d) gegebenenfalls weiteren von den Monomeren (a) bis (c) verschiedenen einwertigen oder mehrwertigen Verbindungen mit reaktiven Gruppen, bei denen es sich um alkoholische Hydroxylgruppen, primäre oder sekundäre Aminogruppen oder Isocyanatgruppen handelt und

Als Diisocyanate a) sind insbesondere solche der Formel X(NCO)₂ zu nennen, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol (TDI), 4,4'-Diisocyanato-diphenylmethan, 2,4'-Diisocyanato-diphenylmethan (MDI), p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z. B. Uretdiongruppen oder Carbodiimidgruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000 g/mol, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, ß-Propiolacton, γ-Butyrolacton und/oder Methyl-ε-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedermolekulare Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxy-diphenyl)-propan oder Anilin erhältlich. Besonders bevorzugt ist Polytetrahydrofuran des Molekulargewichtsbereiches von 240 bis 5000 g/mol, und vor allem 500 bis 4500 g/mol. Daneben können auch Mischungen aus Polyesterdiolen und Polyetherdiolen als Monomere (b1) eingesetzt werden.

Ebenfalls geeignet sind Polyhydroxyolefine, bevorzugt solche mit 2 endständigen Hydroxylgruppen, z. B. α,-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 0 622 378 bekannt. Weitere geeignete Polyole sind Polyacetale, Polysiloxane und Alkydharze.

Die Polyole können auch als Gemische eingesetzt werden.

Die Härte und der Elastizitätsmodul der Polyurethane (I) lassen sich erhöhen, wenn als Diole (b) neben den Diolen (b1) noch niedermolekulare Diole (b2) mit einem Molekulargewicht von etwa 60 bis 500 g/mol, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei Diole mit 2 bis 12 C-Atomen, unverzweigte Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Diolen (b2) 0,1 : 1 bis 5:1, besonders bevorzugt 0,2 : 1 bis 2 : 1.

Um die Wasserdispergierbarkeit der Polyurethane zu erreichen, enthalten die Polyurethane Monomere (c), die wenigstens eine Isocyanatgruppe oder wenigstens eine gegenüber Isocyanatgruppen reaktive Gruppe und darüberhinaus wenigstens eine anionische Gruppe haben.

Der Anteil der Komponenten mit anionischen Gruppen an der Gesamtmenge der Komponenten (a), (b), (c) und (d) wird im allgemeinen so bemessen, dass die Molmenge der anionischen Gruppen, bezogen auf die Gewichtsmenge aller Monomere (a) bis (d), 30 bis 1000 mmol/kg, bevorzugt 50 bis 500 mmol/kg und besonders bevorzugt 80 bis 300 mmol/kg Polyurethan beträgt.

Bei den anionischen Gruppen handelt es sich insbesondere die Sulfonat-, Carboxylat- und die Phosphatgruppe.

Als Monomere mit anionischen Gruppen, bzw. mit Säuregruppen, welche durch Neutralisierung in eine anionische Gruppe überführt werden, kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen.

Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (c₁) 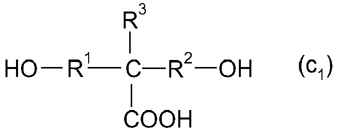 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, ß-Alanin oder die in der DE-A 2034479 genannten Addukte von aliphatischen diprimären Diaminen an α,β-ungesättigte Carbon- oder Sulfonsäuren in Betracht.

Solche Verbindungen gehorchen beispielsweise der Formel (c₂)

H₂N-R⁴-NH-R⁵-X (c₂)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel c2 sind die N-(2-Aminoethyl)-2-aminoethancarbonsäure, bzw -sulfonsäure.

Weiterhin bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind. Ebenfalls gut geeignete Monomere c) sind Addukte von aliphatischen Diaminen, beispielsweise Ethylendiamin, oder aber Propylendiamin an Acrylate oder Methacrylate. Die anionischen Gruppen des Polyurethans sind zu mindestens 10 Mol %, vorzugsweise zu mindestens 40 Mol%, besonders bevorzugt zu mindestens 70 Mol %, ganz besonders bevorzugt zu mindestens 90 Mol % und insbesondere vollständig (100 mol %) mit einem Alkanolamin neutralisiert, d. h. sie liegen als Salz vor, wobei die Säuregruppe das Anion ist und Alkanolamin als Kation vorliegt.

Die Neutralisierung mit dem Alkanolamin kann vor, während, jedoch vorzugsweise nach der Isocyanat-Polyaddition erfolgen.

Das Polyurethan kann weitere Monomere (d), die von den Monomeren (a) bis (c) verschieden sind, als Aufbaukomponenten enthalten. Monomere (d) dienen z. B. der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1,129,128), Ketazine (vgl. z.B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane können in einer bevorzugten Ausführungsform z. B. 1 bis 30 mol-%, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d), enthalten

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Als Monomere (d) kommen ferner Monoalkohole in Betracht, die neben der HydroxylGruppe eine weitere gegenüber Isocyanaten reaktive Gruppe tragen wie Monoalkohole mit einer oder mehreren primären und/oder sekundären Aminogruppen, z.B. Monoethanolamin.

Monomere (d), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Als Monomere (d) kommen ferner Monomere in Betracht, welche mindestens eine Isocyanatgruppe oder eine mit Isocyanat reaktive Gruppe und eine andere hydrophile Gruppe, z. B. eine nicht-ionische oder eine kationische Gruppe haben

Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten kann 0 bis 10, bevorzugt 0 bis 6 Gew.-%, bezogen auf die Gewichtsmenge aller Monomere (a) bis (d) betragen.

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (d) sowie ihre jeweiligen Molmengen so gewählt, dass das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (d) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (d) zur Herstellung des im den erfindungsgemäßen wässrigen Dispersionen vorliegenden Polyurethans kann bei Reaktionstemperaturen von 20 bis 180°C, bevorzugt 70 bis 150°C unter Normaldruck oder unter autogenem Druck erfolgen.

Die erforderlichen Reaktionszeiten liegen üblicherweise im Bereich von 1 bis 20 Stunden, insbesondere im Bereich von 1,5 bis 10 Stunden. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflusst wird.

Die Umsetzung, d.h. die Polyaddition der Monomere a), b), c) sowie gegebenenfalls d) zur Herstellung der Polyurethane kann mit Hilfe von organischen oder von organometallischen Verbindungen katalysiert werden. Geeignete organometallische Verbindungen sind u.a. Dibutylzinndilaurat, Zinn-II-octoat oder Diazobicyclo-(2,2,2)-octan. Geeignete Katalysatoren der Umsetzung der Monomere a), b), c) sowie gegebenenfalls d) und e) sind auch Salze des Caesiums, insbesondere Caesiumcarboxylate wie zum Beispiel das Formiat, Acetat, Propionat, Hexanoat oder das 2-Ethylhexanoat des Caesiums.

Als Polymerisationsapparate zur Durchführung der Polyaddition, d.h. der Umsetzung der Monomere a), b), c) sowie gegebenenfalls d) und e) kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:
Nach dem "Acetonverfahren" wird in einem mit Wasser mischbaren und bei Normaldruck unter 100°C siedenden Lösungsmittel aus den Komponenten (a) bis (c) ein ionisches Polyurethan hergestellt. Es wird soviel Wasser zugegeben, bis sich eine Dispersion bildet, in der Wasser die kohärente Phase darstellt.
Das "Prepolymer-Mischverfahren" unterscheidet sich vom Acetonverfahren darin, dass nicht ein ausreagiertes (potentiell) ionisches Polyurethan, sondern zunächst ein Prepolymer hergestellt wird, das Isocyanat-Gruppen trägt. Die Komponenten werden hierbei so gewählt, dass das definitionsgemäße Verhältnis A : B größer 1,0 bis 3, bevorzugt 1,05 bis 1,5 beträgt. Das Prepolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Prepolymere unter Kettenverlängerung abreagieren.
Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.
Die erfindungsgemäßen Polyurethandispersion enthält, wie auch oben unter Monomer c) ausgeführt, Alkanolamine zur Neutralisierung der anionischen Gruppen.

Die Alkanolamine enthalten mindestens zwei Hydroxylgruppen; vorzugsweise enthalten sie mindestens Hydroxylgruppen, besonders bevorzugt enthalten sie drei Hydroxylgruppen.

Bei den Alkanolaminen handelt es sich vorzugsweise um solche der Formel 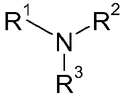 worin R1 für ein H Atom, eine Kohlenwasserstoffgruppe oder für eine durch mindestens eine Hydroxylgruppe substituierte Kohlenwasserstoffgruppe steht und R² und R³ jeweils für eine durch mindestens eine Hydroxylgruppe substituierte Kohlenwasserstoffgruppe stehen

Die Kohlenwasserstoffgruppen oder durch Hydroxylgruppen substituierte Kohlenwasserstoffgruppen haben vorzugsweise 1 bis 10 C Atome, insbesondere 2 bis 10 c Atome und enthalten vorzugsweise keine anderen Heteroatome als die der Hydroxylgruppe.

Besonders bevorzugt steht R1 für eine C₁ bis C₄ Alkylgruppe, insbesondere C₂ bis C₄ Alkylgruppe oder eine durch eine Hydroxylgruppe substituierte C₁ bis C₄ Alkylengruppe, insbesondere C₂ bis C₄ Alkylengruppe, und R² und R³ jeweils für eine durch eine Hydroxylgruppe substituierte C₁ bis C₄, insbesondere C₂ bis C₄, bzw. C₂ oder C₃ Alkylengruppe.

Bevorzugte Alkanolamine sind z.B. Triethanolamin und ganz besonders bevorzugt Triisopropanolamin.

Die Kaschierklebstoffe (zusammenfassend kurz wässrige Zusammensetzungen) können ausschließlich aus den Polyurethandispersionen bestehen, sie können für diese Verwendung weitere Hilfs- und Zusatzstoffe wie Vernetzer, Treibmittel, Entschäumer, Emulgatoren, Verdickungsmittel und Thixotropiermittel sowie Farbmittel wie Farbstoffe und Pigmente enthalten.

Die wässrige Zusammensetzung kann gewünschte Vernetzer z.B. Carbodiimide oder Aziridine enthalten.

Die wässrigen Zusammensetzungen eignen sich sowohl als 1 K oder 2K Systeme. 1 K-Systeme enthalten einen Vernetzer und sind lagerstabil; bei 2K-Systemen wird der Vernetzer erst kurz vor der Verwendung zugesetzt.

Bei der Verwendung als Kaschierklebstoff werden Polymerfolien, Papier, insbesondere Dekorpapiere, welche mit einem Polymer getränkt oder beschichtet sind, oder Leder insbesondere mit Gegenständen aus Holz, worunter auch gebundene Holzfasermaterialien wie Spanplatten oder sonstige Platten aus Zellulosematerialien verstanden werden, Metall oder Kunststoff verklebt, zum Beispiel werden Möbel, bzw. Möbelteile mit Papier oder Polymerfolien kaschiert oder Automobilinnenteile mit Polymerfolien kaschiert.

Bei den 1 K-Systemen ist es auch möglich, die erfindungsgemäße Zusammensetzung zunächst auf die zu kaschierende Polymerfolie oder das zu kaschierende Papier aufzubringen und die beschichtete Polymerfolie bzw. das beschichtete Papier zu lagern, bis zu einem späteren Zeitpunkt die Kaschierung, z.B. des Möbelteils oder Automobilinnenteil erfolgen soll.

Die erfindungsgemäße Polyurethandispersion hat eine geringe Viskosität. Bei der Verwendung der Polyurethandispersion als Kaschierklebstoff werden Verbunde mit hoher Festigkeit, insbesondere auch hoher Wärmestandfestigkeit, d.h. Festigkeit bei erhöhter Temperatur, erhalten. Die erfindungsgemäßen Zusammensetzungen sind als 1 K-System (Vernetzer mit blockierten reaktiven Gruppen) lagerstabil und können auf die zu kaschierenden Polymerfolien oder Papier aufgebracht und so gelagert werden.

### Beispiele

Die Viskosität der Dispersionen wurde in einem Rotationsviskosimeter der Fa. Paar Physica mittels des Messgerätes Viscolab LC 10 der Fa. Paar Physica bei 23°C und einem Schergefälle von 250 s⁻¹ gemessen.

### Beispiel

### PUR-Dispersion mit Triisopropanolamin

Es werden 800 g (0,40 mol) eines Polypropylenglycols der OH-Zahl 56, 80,48 g (0,60 mol) Dimethylolpropionsäure und 100 g Aceton vorgelegt, bei 60 °C mit 174,16 g (1,00 mol) Toluylendiisocyanat versetzt und 6 Stunden bei 90°C weitergerührt. Dann werden nacheinander 800 g Aceton, 54,01 g Triisopropanolamin (TIPA) (0,240 mol) und 50 g Wasser zudosiert und weitere 5 min nachgerührt. Das Reaktionsgemisch wird mit 1600 g Wasser dispergiert; danach wird das Aceton im Vakuum abdestilliert und der Feststoffgehalt auf 40 % eingestellt.
Visk.: 31 mPas

### Vergleichsbeispiel 1 PUR-Dispersion mit NaOH

Es werden 800 g (0,40 mol) eines Polypropylenglycols der OH-Zahl 56, 80,48 g (0,60 mol) Dimethylolpropionsäure und 100 g Aceton vorgelegt, bei 60 °C mit 174,16 g (1,00 mol) Toluylendiisocyanat versetzt und 6 Stunden bei 90 °C weitergerührt. Dann werden nacheinander 800 g Aceton und eine Lösung von 19,2 g Natriumhydroxid (0,240 mol) in 25 g Wasser zudosiert und weitere 5 min nachgerührt. Das Reaktionsgemisch wird mit 1600 g Wasser dispergiert; danach wird das Aceton im Vakuum abdestilliert und der Feststoffgehalt auf 40 % eingestellt.
Visk.: 190 mPas

### Vergleichsbeispiel 2 PUR-Dispersion mit Tributylamin

Es werden 800 g (0,40 mol) eines Polypropylenglycols der OH-Zahl 56, 80,48 g (0,60 mol) Dimethylolpropionsäure und 100 g Aceton vorgelegt, bei 60 °C mit 174,16 g (1,00 mol) Toluylendiisocyanat versetzt und 6 Stunden bei 92,0 °C weitergerührt. Dann werden nacheinander 800 g Aceton, 44,49 g Tributylamin (TBA) (0,240 mol) und 50 g Wasser zudosiert und weitere 5 min nachgerührt. Das Reaktionsgemisch wird mit 1600 g Wasser dispergiert. Der Versuch koaguliert; es wurde keine brauchbare Dispersion erhalten.

### Vergleichsbeispiel 3 PUR-Dispersion mit Triethylamin

Es werden 800 g (0,40 mol) eines Polypropylenglycols der OH-Zahl 56, 80,48 g (0,60 mol) Dimethylolpropionsäure und 100 g Aceton vorgelegt, bei 60 °C mit 174,16 g (1,00 mol) Toluylendiisocyanat versetzt und 6 Stunden bei 92,0 °C weitergerührt. Dann werden nacheinander 800 g Aceton, 24,29 g Triethylamin (TEA) (0,240 mol) und 50 g Wasser zudosiert und weitere 5 min nachgerührt. Das Reaktionsgemisch wird mit 1600 g Wasser dispergiert.
Visk.: 374 mPas

**Tabelle: Feststoffgehalt und Viskosität der Polyurethandispersionen**

| Versuch | Base | FG [%] | Viskosität [mPas]* |
|---|---|---|---|
| Beispiel | TIPA | 40 | 30,8 |
| Vergleichsbeispiel 1 | NaOH | 40 | 190 |
| Vergleichsbeispiel 2 | TBA | ./. | ./. |
| Vergleichsbeispiel 3 | TEA | 40 | 374 |

gemessen bei 23°C und 250 s⁻¹

### Bestimmung der Schälfestigkeit

Für die Prüfung wird die Polyurethandispersion 1:1 mit einer Ethylenvinylacetatdispersion (Airflex^{®} EP 17) abgemischt. Zur Ermittlung der Schälfestigkeit wird ein ABS-Formteil mittels eines Rakels in einer Auftragsstärke von ca. 80 µm mit der Dispersionsmischung beschichtet. Das beschichtete Formteil wird getrocknet. In einer auf 90°C beheizten Laborpresse wird unter einem Druck von etwa 3 bar eine handelsübliche geschäumte PVC-Folie, wie sie für die Kaschierung von KfZ-Innenteilen verwendet wird, während 30 sec. hinzukaschiert. Nach einer 3-5 tägigen Lagerung der Kaschierung bei Raumtemperatur, wird unter einem Abzugswinkel von 90° die Schälfestigkeit der Verklebung in einer Umgebungstemperatur von 100°C gemessen.

| Dispersion aus | Base | Schälfestigkeit bei 100°C (N/50 mm) |
|---|---|---|
| Beispiel | TIPA | 13 |
| Vergleichsbeispiel 1 | NaOH | 9 |
| Vergleichsbeispiel 3 | TEA | 5 |

## Patentansprüche

1. Verwendung einer Polyurethandispersion als Bindemittel für Kaschierklebstoffe, **dadurch gekennzeichnet, dass** das Polyurethan anionische Gruppen enthält, welche zu mindestens 10 Mol % durch Alkanolamine mit mindestens zwei Hydroxylgruppen neutralisiert sind, wobei Polyurethandispersionen, welche wasseremulgierbare Polyisocyanate enthalten, ausgeschlossen sind.

2. Verwendung gemäß Anspruch 1, **dadurch gekennzeichnet, dass** das Polyurethan aufgebaut ist aus
a) Diisocyanaten,
b) Diolen, von denen
b1) 10 bis 100 mol-%, bezogen auf die Gesamtmenge der Diole (b), ein Molekulargewicht von 500 bis 5000 g/mol aufweisen, und
b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine anionische Gruppe tragen, wodurch die Wasserdispergierbarkeit der Polyurethane bewirkt wird, und
d) gegebenenfalls weiteren von den Monomeren (a) bis (c) verschiedenen einwertigen oder mehrwertigen Verbindungen mit reaktiven Gruppen, bei denen es sich um alkoholische Hydroxylgruppen, primäre oder sekundäre Aminogruppen oder Isocyanatgruppen handelt.

3. Verwendung gemäß Anspruch 1 oder 2, **dadurch gekennzeichnet, dass** der Gehalt an anionischen oder potentiell anionischen Gruppen im Polyurethan 30 bis 1000 mmol/kg Polyurethan beträgt.

4. Verwendung gemäß einem der Ansprüche 1 bis 3, **dadurch gekennzeichnet, dass** es sich bei den Alkanolaminen um solche der Formel 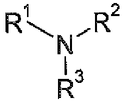 handelt, worin R1 für ein H Atom, eine Kohlenwasserstoffgruppe oder für eine durch mindestens eine Hydroxylgruppe substituierte Kohlenwasserstoffgruppe steht und R² und R³ jeweils für eine durch mindestens eine Hydroxylgruppe substituierte Kohlenwasserstoffgruppe stehen.

5. Verwendung gemäß einem der Ansprüche 1 bis 4, **dadurch gekennzeichnet, dass** R¹ für ein H Atom, eine C₁ bis C₄ Alkylgruppe oder eine durch eine Hydroxylgruppe substituierte C₁ bis C₄ Alkylengruppe steht und R² und R³ jeweils für eine durch eine Hydroxylgruppe substituierte C₁ bis C₄ Alkylengruppe stehen.

6. Verwendung gemäß einem der Ansprüche 1 bis 5, **dadurch gekennzeichnet, dass** es sich bei dem Alkanolamin um Triisopropanolamin handelt.

7. Verwendung gemäß einem der Ansprüche 1 bis 6, **dadurch gekennzeichnet, dass** die anionischen Gruppen des Polyurethans zu mindestens 80 mol % mit Alkanolaminen neutralisiert sind.

8. Verwendung gemäß einem der Ansprüche 1 bis 7, **dadurch gekennzeichnet, dass** die Polyurethandispersion zusätzlich einen Vernetzer enthält.

## Claims

1. The use of a polyurethane dispersion as binder for laminating adhesives, wherein the polyurethane comprises anionic groups at least 10 mol% of which are neutralized by alkanolamines having at least two hydroxyl groups, excluding polyurethane dispersions comprising water-emulsifiable polyisocyanates.

2. The use according to claim 1, wherein the polyurethane is synthesized from
a) diisocyanates,
b) diols of which
b1) 10 to 100 mol%, based on the total amount of diols (b), have a molecular weight of 500 to 5000 g/mol and
b2) 0 to 90 mol%, based on the total amount of diols (b), have a molecular weight of 60 to 500 g/mol,
c) monomers other than the monomers (a) and (b), containing at least one isocyanate group or at least one isocyanate-reactive group and further carrying at least one anionic group by means of which the polyurethane is made dispersible in water, and
d) optionally further, monofunctional or polyfunctional compounds other than the monomers (a) to (c), containing reactive groups which are alcoholic hydroxyl groups, primary or secondary amino groups or isocyanate groups.

3. The use according to claim 1 or 2, whose polyurethane contains 30 to 1000 mmol of anionic or potentially anionic groups per kg of polyurethane.

4. The use according to any one of claims 1 to 3, wherein the alkanolamines are of the formula 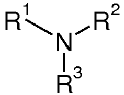 in which R1 is a hydrogen atom, a hydrocarbon group, or a hydrocarbon group which is substituted by at least one hydroxyl group, and R² and R³ are each a hydrocarbon group which is substituted by at least one hydroxyl group.

5. The use according to any one of claims 1 to 4, wherein R¹ is a hydrogen atom, a C₁ to C₄ alkyl group, or a C₁ to C₄ alkylene group which is substituted by a hydroxyl group, and R² and R³ are each a C₁ to C₄ alkylene group which is substituted by a hydroxyl group.

6. The use according to any one of claims 1 to 5, wherein the alkanolamine is triisopropanolamine.

7. The use according to any one of claims 1 to 6, wherein at least 80 mol% of the anionic groups of the polyurethane are neutralized with alkanolamines.

8. The use according to any one of claims 1 to 7, wherein the polyurethane dispersion further comprises a crosslinker.

## Revendications

1. Utilisation d'une dispersion de polyuréthane en tant que liant pour adhésifs de contre-collage, **caractérisée en ce que** le polyuréthane contient des groupes anioniques, qui sont neutralisés à au moins 10 % en moles par des alcanolamines contenant au moins deux groupes hydroxyle, les dispersions de polyuréthane qui contiennent des polyisocyanates émulsifiables dans l'eau étant exclues.

2. Utilisation selon la revendication 1, **caractérisée en ce que** le polyuréthane est formé à partir de
a) des diisocyanates,
b) des diols, parmi lesquels
b1) 10 à 100 % en moles, par rapport à la quantité totale de diols (b), présentent un poids moléculaire de 500 à 5 000 g/mol, et
b2) 0 à 90 % en moles, par rapport à la quantité totale de diols (b), présentent un poids moléculaire de 60 à 500 g/mol,
c) des monomères différents des monomères (a) et (b), contenant au moins un groupe isocyanate ou au moins un groupe réactif avec les groupes isocyanate, qui portent par ailleurs au moins un groupe anionique qui confère la dispersibilité dans l'eau aux polyuréthanes, et
d) éventuellement d'autres composés monovalents ou polyvalents différents des monomères (a) à (c), contenant des groupes réactifs qui sont des groupes hydroxyle alcooliques, des groupes amino primaires ou secondaires, ou des groupes isocyanate.

3. Utilisation selon la revendication 1 ou 2, **caractérisée en ce que** la teneur en groupes anioniques ou potentiellement anioniques dans le polyuréthane est de 30 à 1 000 mmol/kg de polyuréthane.

4. Utilisation selon l'une quelconque des revendications 1 à 3, **caractérisée en ce que** les alcanolamines sont de formule 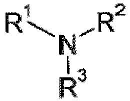 dans laquelle R¹ représente un atome H, un groupe hydrocarboné ou un groupe hydrocarboné substitué par au moins un groupe hydroxyle, et R² et R³ représentent chacun un groupe hydrocarboné substitué par au moins un groupe hydroxyle.

5. Utilisation selon l'une quelconque des revendications 1 à 4, **caractérisée en ce que** R¹ représente un atome H, un groupe alkyle en C₁ à C₄ ou un groupe alkylène en C₁ à C₄ substitué par un groupe hydroxyle, et R² et R³ représentent chacun un groupe alkylène en C₁ à C₄ substitué par un groupe hydroxyle.

6. Utilisation selon l'une quelconque des revendications 1 à 5, **caractérisée en ce que** l'alcanolamine est la triisopropanolamine.

7. Utilisation selon l'une quelconque des revendications 1 à 6, **caractérisée en ce que** les groupes anioniques du polyuréthane sont neutralisés à au moins 80 % en moles avec des alcanolamines.

8. Utilisation selon l'une quelconque des revendications 1 à 7, **caractérisée en ce que** la dispersion de polyuréthane contient en outre un agent de réticulation.
